# EUROPEAN PATENT SPECIFICATION

(11) **EP 1 827 646 B1**
(45) Date of publication and mention of the grant of the patent: **04.11.2015**
(21) Application number: 05857030.0
(22) Date of filing: 29.11.2005
(51) Int. Cl.: B01F 5/04, B01D 1/30, B01D 19/00, B01D 21/26, B01D 53/22, B01D 53/86

(54) **SYSTEM FOR FACILITATING TRANSFER OF A COMPONENT FROM A LIQUID PHASE TO A FLUID PHASE**
VORRICHTUNG ZUM VEREINFACHTEN TRANSFER EINER KOMPONENTE VON EINER FLÜSSIGEN ZU EINER FLUIDEN PHASE
DISPOSITIF DESTINES A FACILITER LE TRANSFERT D'UN COMPOSANT D'UNE PHASE LIQUIDE VERS UNE PHASE FLUIDIQUE

(30) Priority: 30.11.2004 US 1701; 30.11.2004 US 632433 P
(43) Date of publication of application: 05.09.2007
(73) Proprietor: Phyre Technologies, Inc., San Diego, California 92121 (US)
(72) Inventor: KOENIG, Donald, San Diego, California 92122 (US); LIMAYE, Santosh, El Cajon, California 92020 (US)
(74) Representative: Lord, Hilton David
(86) International application number: PCT/US2005/043166
(87) International publication number: WO 2006/086046

(56) References cited:
- EP-A1- 0 475 930
- EP-A1- 1 579 902
- US-A- 4 895 683
- US-A- 5 139 668
- US-A- 5 207 734
- US-A- 5 316 682
- US-A- 5 522 917
- US-A- 6 053 249
- US-A1- 2004 064 002
- US-B1- 6 315 815
- US-B1- 6 315 815
- US-B1- 6 431 528
- US-B1- 6 431 528

## Description

### FIELD OF THE INVENTION

The present invention relates generally to the field of contacting systems. In a particular embodiment, the invention relates to systems of contacting two or more fluids and uses thereof, such as removing contaminants from or adding supplements to liquids, such as fuels. In another embodiment, the present invention relates generally to the field of catalytic reaction systems. In another particular embodiment, the invention relates to systems of catalytically interacting one or more fluids and uses thereof, such as removing contaminants from or adding supplements to liquids.

### BACKGROUND OF THE INVENTION

Removal of a material from or addition of a material to a liquid can be useful in many applications. For example, adding a gas to a liquid is required for the production of carbonated beverages. Removal of a gas from a liquid may be desirable to produce a purified liquid, for example. Purified liquids are desirable in many applications. In particular, removal of contaminants from a liquid may be required in many industrial and commercial applications. For example, in the case of fuels, such as diesel or jet fuels, impurities in the fuel can result in high maintenance costs and poor performance. For example, the presence of oxygen in fuels can result in poor performance of a machine using the fuel, such as a jet engine. Further, oxygen-saturated fuels can inhibit a coolant or heat-sink function served by fuels when the oxygen-saturated fuel causes coking, thereby restricting fuel flow.

Addition of a material to a liquid or intimate mixing of two or more liquids can be useful in many catalytic applications. For example, adding a gas to a liquid is desirable for promoting chemical conversions, such as oxidation reactions. Further, in the case of preparing complex emulsions, the mixing of fluids with a high degree of immiscibility can be exceedingly difficult.

Conventional methods of removing contaminants from liquids, such as the removal of oxygen from fuels, have considerable drawbacks. For example, use of reducing agents to chemically bind the oxygen may result in further contamination issues related to the active metals which may be used. Further, the large volume and weight of such systems prohibits their use on aircraft in-flight purification systems. Accordingly, there is a need for improved systems and methods of purifying liquids while eliminating such drawbacks.

Conventional methods of promoting catalytic conversion between such fluids also have considerable drawbacks. For example, the use of reducing agents may result in further contamination issues related to the active metals which may be used. Accordingly, there is also a need for improved systems and methods of promoting catalytic interactions and intimate mixing of fluids while eliminating any drawbacks.

US 6315815 discloses apparatus for deoxygenating liquid fuel wherein a membrane filter is disposed in the fuel system and is selected to remove oxygen from the fuel. Fuel with dissolved oxygen is flowed in contact with one surface of the membrane filter, and removed oxygen is collected from the opposite surface of the filter.

US 6431528 discloses apparatus for removing impurities from liquid comprising static mixers arranged so that its longitudinal direction is substantially vertical. Liquid is supplied from the upper end, and gas from the lower end, of the static mixer, and the two are subjected to gas-liquid contact inside the static mixer.

### SUMMARY OF THE INVENTION

The present invention provides a system for purifying liquids which allows efficient and/or uniform removal of components from the liquid. The components may be undesired components to be removed from a liquid, for example, each of which is referred to herein as "component." In this regard, the disclosed embodiments provide for the purification of a liquid by passing the liquid and a fluid through a porous medium which facilitates mixing of the liquid and the fluid. A differential of partial pressure, activity, fugacity or concentration of the components between the liquid and the fluid facilitates the transfer of the components between the liquid and the fluid in the mixed liquid and fluid.

There is disclosed herein a system for transferring a component between a liquid phase and a fluid phase according to claim 1. Further embodiments of the invention are defined in the dependent claims.

### BRIEF DESCRIPTION OF THE FIGURES

Figure 1A is a schematic illustration of one embodiment of a purification system not according to the invention.
Figure 1B is a schematic illustration of another embodiment of a purification system not according to the invention.
Figure 1C is a schematic illustration of still another embodiment of a purification system according to the invention.
Figure 2 is another schematic illustration of a purification system according to the invention.
Figure 3 is a schematic illustration of the contactor module shown in Figure 2.
Figure 4 is a schematic illustration of one embodiment of a catalytic interaction system according to the invention.
Figure 5 is another schematic illustration of the system shown in Figure 4.
Figure 6 is a schematic illustration of the contactor module shown in Figure 5.
Figure 7A is an illustration of a mixer body according to an embodiment of the invention.
Figure 7B is a cross-sectional view of the mixer body shown in Figure 7A.
Figure 8 is a cross-sectional top view of another embodiment of a mixer body according to the invention.
Figure 9A is a pictorial illustration of an embodiment of a contactor according to the invention.
Figure 9B is a pictorial illustration of an embodiment of a contactor module according to the invention.
Figure 9C is a pictorial illustration showing the porous body of an exemplary contactor and having exemplary pore shapes according to an embodiment of the invention.
Figures 10A and 10B graphically illustrate the component concentration in a fluid during mixing in prior art systems.
Figure 10C graphically illustrates the mixing of a liquid and a fluid using a contactor according to an embodiment of the invention.
Figure 11 is an illustration of an embodiment of a separator according to the invention.

### DETAILED DESCRIPTION OF THE PREFERRED EMBODIMENTS

The invention includes a system for transferring a component between a liquid and a fluid. The system includes a porous medium adapted to cause mixing of a liquid and a fluid, at least one of the liquid and the fluid having a component therein. The porous medium is for transferring at least a portion of the component from the liquid to the fluid. The system may also include a separator for separating the liquid and the fluid.

As used herein with respect to separation, a "component" may be mixed, absorbed, suspended or dissolved in the liquid or the fluid, or both.

"Fluid" may be a liquid, a gas or a material in any phase which allows the material to readily flow.

The system also includes a fluid purification module adapted to remove the component from the fluid. In a particular embodiment, the fluid purification module includes a pressure swing adsorption module. In other embodiments, the purification module may include membranes. A recirculation line may be provided, for example, to transfer the fluid from the fluid purification module to the porous medium.

As used herein, "purification" and "purifying" refer to the removal from a fluid of one or more components. The removal may be partial, complete or to a desired level and may include removal of only a portion or all components contained therein.

The system also includes a recirculation line for transferring the fluid from the separator to the porous medium.

In one embodiment, the system also includes a vapor trap adapted to separate vaporized liquid mixed with the fluid from the separator.

The porous medium includes pores having a pore size of less than 500 µm (microns), the pore size is between 100 and 500 µm (microns). In another embodiment, the pore size is between 200 and 500 µm (microns). In another embodiment, the pore size is between 300 and 500 µm (microns). In a further particular embodiment, the pore size is between about 350 and about 450 µm (microns). In a still further embodiment, the pore size is approximately 400 µm (microns).

In one embodiment, the system also includes a pre-mixer for providing a mixture of the fluid and the liquid to the porous medium. In a particular embodiment, the pre-mixer includes a plurality of axial channels for passing the liquid therethrough into an axial path directed toward the porous medium and a porous body for diffusing the fluid into the axial path. The pre-mixer may also include an annular passage along a circumferential perimeter of the pre-mixer for receiving the fluid and directing the fluid to the porous body.

The porous medium may be made of an inert solid material, such as metals, ceramics, plastic, glass or other organic or inorganic materials.

In one embodiment, the separator includes at least one centrifugal separator.

In a particular embodiment, the liquid is a fuel and the component is a gas. The fuel may be diesel, kerosene or jet fuel, for example. The gas may be oxygen.

In a particular embodiment, the component is a gas that is dissolved in the liquid prior to passing the liquid and the fluid through the porous medium.

In one embodiment, the fluid is a gas. In a particular embodiment, the gas is a non-reactive gas under operating conditions, such as nitrogen, a noble gas (for example, argon or helium), carbon dioxide, or a mixture thereof, that is substantially free of the component.

There is disclosed herein a method of transferring a component between a liquid and a fluid. The method includes passing a liquid and a fluid through a porous medium, at least one of the liquid and the fluid containing a component therein, the passing causing mixing of the liquid and the fluid and transfer of at least some of the component between the liquid and the fluid. The method may further include separating the liquid and the fluid, at least one of the separated fluid and the separated liquid including at least some of the component.

It is disclosed herein that the method also includes removing the component from the fluid if the component has been transferred from the liquid to the fluid. Removing the component may include pressure swing adsorption. It is disclosed herein that the purified fluid may be recirculated for use in any continuation of passing the fluid through the porous medium.

It is disclosed herein that the method may also include recovering any vaporized liquid mixed with the fluid after separation of the fluid from the liquid.

It is disclosed herein that the method may also include passing the liquid and the fluid through a pre-mixer before passing through the porous medium. It is disclosed herein that the pre-mixer may include a plurality of axial channels for passing the liquid therethrough into an axial path directed toward the porous medium and a porous body for diffusing the fluid into the axial path. The pre-mixer may further include an annular passage along a circumferential perimeter of the pre-mixer for receiving the fluid and directing the fluid to the porous body.

It is disclosed herein that separating the liquid and the fluid may include passing the fluid and the liquid through at least one centrifugal separator.

Another embodiment of the invention includes a porous medium for facilitating mixing of a liquid and a fluid. The porous medium includes a porous body and pores formed in the porous body. The pores are adapted to cause surface mixing of a fluid with a liquid having a component flowing through the porous body. The pores have pore sizes sufficiently small and pore shapes sufficiently complex to cause surface mixing.

There is disclosed herein a method of purifying a liquid. The method includes passing a liquid and a fluid through a porous medium, the liquid containing a component therein, the passing causing mixing of the liquid and the fluid and transfer of at least some of the component from the liquid to the fluid. The method also includes separating the liquid and the fluid, the separated fluid including at least some of the component, and removing the component from the fluid. The fluid with the component removed is recirculated for use in any continuation of passing the liquid and fluid through the porous medium.

Another embodiment of the invention includes a mixing body for mixing a liquid and a fluid. The mixing body includes a plurality of axial channels for passing a liquid therethrough into a path substantially aligned with the axial channels and a porous body for diffusing a fluid into the path. In a particular embodiment, the mixing body also includes an annular passage along a circumferential perimeter of the porous body for receiving the fluid and directing the fluid to the porous body.

In this regard, "a path substantially aligned with the axial channels" refers to the general direction of flow. The path may include a conical or radial component. For example, in certain regions, the path may include only a radial component which transitions or diffuses into an axial flow.

There are disclosed herein methods for the catalytic conversion of a plurality of reactants to produce one or more products therefrom. The methods include passing the plurality of reactants through a catalytically active porous medium. The passing causes mixing of the plurality of reactants and chemical conversion of one or more of the reactants, thereby producing one or more products therefrom.

"Catalytic" refers to facilitating a reaction or interaction involving one or more reactants. Catalytic materials may include noble metals, transition metals, metal oxides, nitrides, carbides, enzymes, and the like, as well as various combinations thereof. Noble metals contemplated for use herein include platinum, palladium, gold and silver. Transition metal oxides contemplated for use herein include RuOx, LaMnOx and peravskites.

It is disclosed herein that each of the plurality of reactants is a fluid.

"Fluid" may be a liquid, a gas or a material in any phase which allows the material to flow readily.

It is disclosed herein that the plurality of reactants may be selected from the group consisting of one or more liquids, each optionally containing a component therein; one or more gases, each when present containing a component therein; and combinations of any two or more thereof.

As used herein with respect to catalytic conversion, a "component" may be mixed, absorbed, suspended or dissolved in the liquid or the fluid. Components contemplated herein include oxygen gas, carbon monoxide, carbon dioxide, methane, etc.

It is disclosed herein that the passing through a catalytically active porous medium can facilitate a variety of reactions. For example, such passing may promote reaction between two reactive liquids; alternatively, such passing may promote reaction between a reactive liquid and a component therein; or such passing may promote reaction between a reactive liquid and a gas, or such passing may promote reaction between a gas and a component therein.

The plurality of reactants may be passed through the catalytically active porous medium at a ratio selected to achieve a desired level of conversion of one or more reactants and/or to achieve a desired level of production of one or more products.

It is disclosed herein that at least one reactant can be a liquid. The liquid reactant may include one or more hydrocarbons.

It is disclosed herein that at least one reactant can be a gas. Exemplary reactant gases include hydrogen, oxygen, carbon dioxide, NOₓ, methane, and the like, as well as mixtures of any two or more thereof.

It is disclosed herein that at least one reactant can be a liquid, containing a reactive gas therein.

In another embodiment, the invention can include a system for the catalytic conversion of one or more reactants. The system can include a catalytically active porous medium adapted to cause mixing of a plurality of reactants. The catalytically active porous medium can be further adapted to cause chemical conversion of the one or more reactants to produce at least one product therefrom.

In a particular embodiment, the plurality of reactants can be selected from the group consisting of one or more liquids, each optionally containing a component therein; one or more gases, each optionally containing a component therein; and combinations of any two or more thereof.

In a particular embodiment, the system can further include a separator for separating two or more products or reactants after the chemical conversion. The system can further include a purification module adapted to remove contaminants from at least one of the products or reactants. The system can also include a recirculation line adapted to transfer at least one of the products or reactants from the purification module to the porous medium as a reactant.

In a particular embodiment, the porous medium can include pores having a pore size of less than 500 µm (microns). In one embodiment, the pore size may be between 100 and 500 m (microns). In another embodiment, the pore size may be between 200 and 500 µm (microns). In another embodiment, the pore size may be between 300 and 500 µm (microns). In still another embodiment, the pore size may be between 350 and 450 µm (microns). In still a further embodiment, the pore size may be approximately 400 µm (microns).

In a particular embodiment, the system further includes a pre-mixer for providing a mixture of two or more reactants to the porous medium. The pre-mixer may include a plurality of substantially axial channels for passing a first reactant therethrough into a path directed toward the porous medium, the first reactant being a liquid; and a porous body for diffusing a second reactant into the path, the second reactant being a fluid. The pre-mixer may further include an annular passage along a circumferential perimeter of the pre-mixer for receiving the fluid and directing the fluid to the porous body.

It is disclosed herein that a catalytically active porous medium for promoting catalytic conversion of a plurality of reactants may include a catalytically active porous body, and pores having pore sizes sufficiently small to cause mixing of a fluid flowing therethrough with a liquid having a component flowing therethrough.

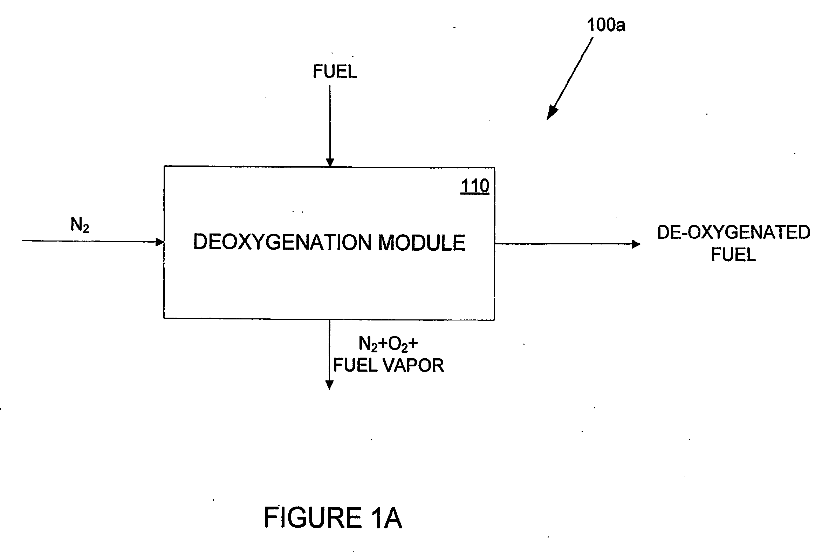

Referring to FIG. 1A, an exemplary system for transferring a component, such as a contaminant, between a liquid and a fluid is schematically illustrated. In the illustrated example, the undesired component is contained in a liquid to be purified. In other embodiments, the component may be contained in the fluid or may be the fluid itself. In the example of FIG. 1A, the liquid to be purified is a fuel having a component, such as gaseous oxygen, absorbed therein. In other embodiments, other liquids with a variety of components may be purified.

The system **100a** includes a purification module, such as a deoxygenation module **110**, which is described in greater detail below. The deoxygenation module **110** is adapted to receive a liquid fuel and gaseous nitrogen. The liquid fuel may have a component, such as gaseous oxygen, absorbed therein. The gaseous nitrogen is preferably substantially oxygen-free. The operation of the deoxygenation module **110** causes the gaseous oxygen to be transferred from the fuel to the nitrogen. Thus, the outputs of the deoxygenation module **110** in the system **100a** are de-oxygenated fuel and gaseous nitrogen with oxygen absorbed therein. A limited amount of fuel vapor may be output with the nitrogen/oxygen stream.

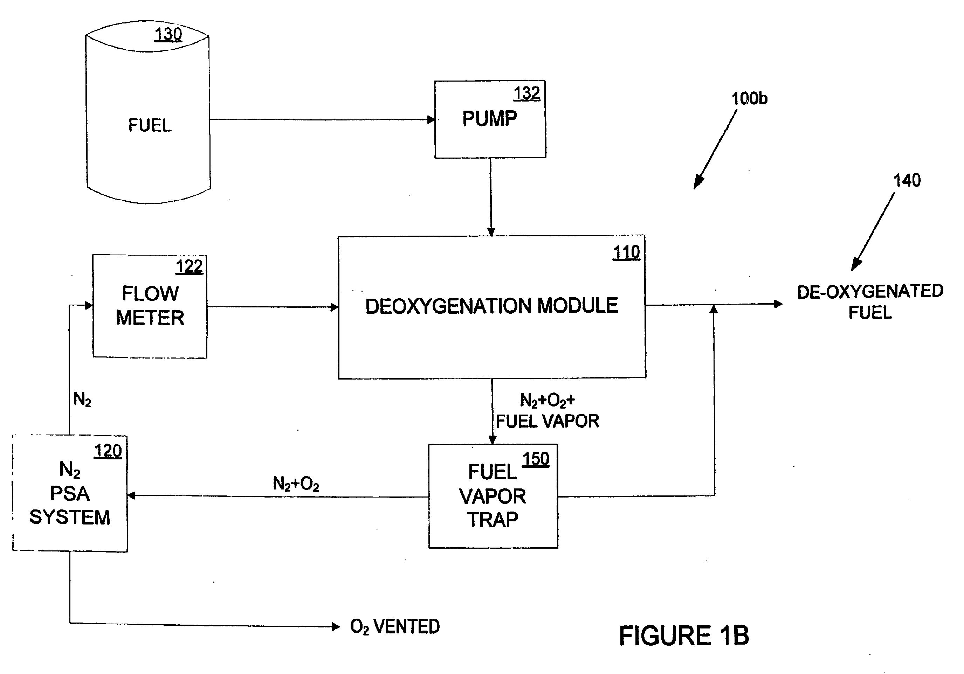

Referring now to FIG. 1B, a second embodiment of a purification system is illustrated. In the system **100b**, the deoxygenation module **110** is adapted to receive fuel from a reservoir such as a fuel tank **130.** The flow of fuel into the deoxygenation module **110** may be facilitated by an optional pump **132** positioned between the fuel tank **130** and the deoxygenation module **110**. The fuel tank **130**, the pump **132** and the deoxygenation module **110** are connected using tubes, pipes or lines, for example. The size of the fuel tank **130** and the capacity of the pump **132** may be determined according to particular applications and requirements. In one embodiment, the deoxygenation module **110** is adapted to receive and process fuel at the rate of 7.57L per minute (2 U.S. gallons per minute).

The deoxygenation module **110** is also adapted to receive a supply of a fluid, such as a gas, to mix with the fuel. In certain embodiments, the fluid is a non-reactive gas, such as nitrogen, argon, helium, or the like. In the illustrated example, the fluid is nitrogen gas. The nitrogen may be received from a pressurized nitrogen bottle. In other embodiments, the nitrogen is received from a fluid purification module, such as a highly optimized pressure swing adsorption (PSA) system **120**, which supplies substantially oxygen-free nitrogen (e.g., 99.9% N₂). The flow of nitrogen into the deoxygenation module **110** may be regulated using a flow meter **122**, for example. In one embodiment, the deoxygenation module **110** is adapted to receive nitrogen and fuel at a rate based on the desired fuel output. For example, the large fluid-to-fuel ratio may be used to obtain a more purified fuel while a smaller fluid-to-fuel ratio may be used to obtain a less purified fuel. In particular embodiments, the fluid-to-fuel ratio may be 10:1, 4:1, 2:1, 1:1, 1:2, 1:4, or 1:10.

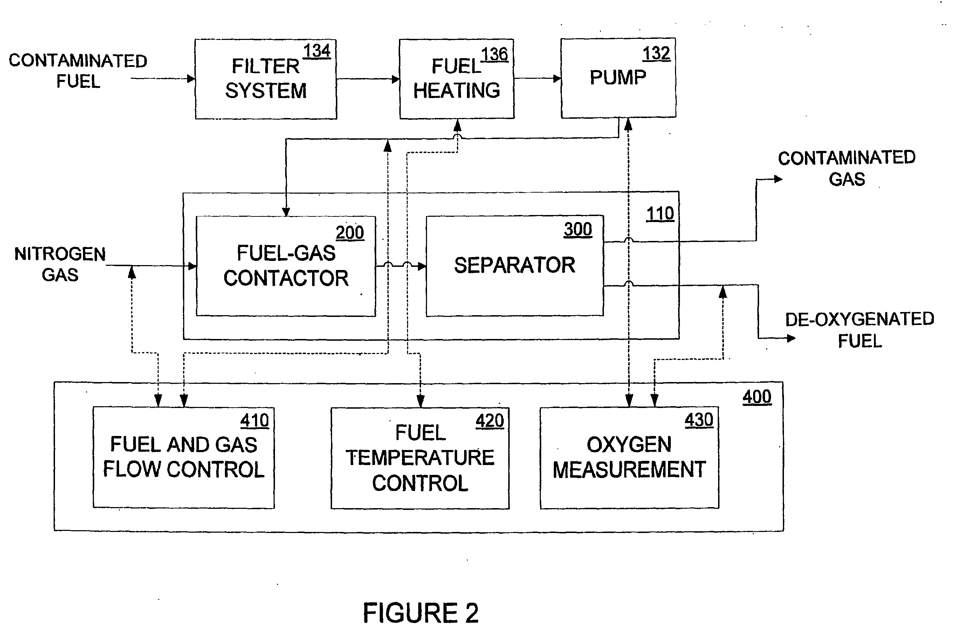

The deoxygenation module **110** is adapted to transfer the component, such as oxygen gas, from the fuel to the nitrogen gas. This aspect of the deoxygenation module is described in greater detail below with reference to Figures 2, 3, 7A, 7B and 8-10C. Thus, the output of the deoxygenation module **110** includes a stream of de-oxygenated fuel **140** and a separate stream of nitrogen gas with oxygen.

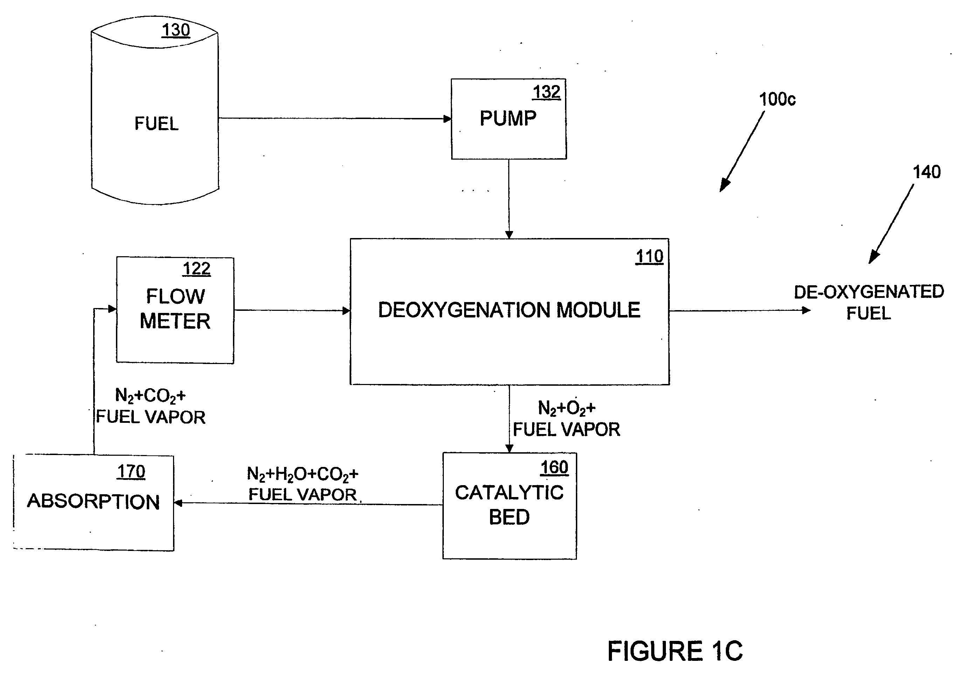

In many cases, certain amounts of the liquid fuel may evaporate either in the deoxygenation module **110** or prior to entering the deoxygenation module **110**. In this regard, the system **100b** includes a fuel vapor recovery module **150** through which the nitrogen stream is processed. The fuel vapor recovery module **150** may be a vapor trap including a coalescing filter adapted to separate the fuel vapor from the nitrogen stream, producing condensed fuel. The condensed fuel is then routed to the fuel stream **140** exiting the deoxygenation module **110**, as shown in Figure 1. In other embodiments, in order to maintain the deoxygenated level of the fuel **140** from the deoxygenation module **110**, the recovered fuel vapor may be routed to the fuel tank **130**.

The stream of nitrogen with oxygen from the fuel vapor recovery module **150** can then be directed to the PSA system **120**, which separates the oxygen from the nitrogen. The purified nitrogen can then be used for deoxygenation of additional fuel, while the oxygen can be vented to the atmosphere. In cases where the system **100b** is operating in a closed environment, such as a laboratory or an operational application in a closed area, the stream of nitrogen and oxygen may be further treated prior to being directed to the PSA system **120**. The stream of nitrogen and oxygen may be similarly treated in systems without a PSA system. For example, the stream of nitrogen and oxygen may be treated through an active carbon filter to remove components prior to either PSA processing or venting to the atmosphere. In other embodiments, the active carbon filter may be positioned upstream of the PSA system **120**. Thus, the components may be removed from the nitrogen as well.

Figure 1C illustrates still another embodiment of a purification system. In the system 100c, the stream of nitrogen, oxygen and fuel vapor is directed through a catalytic bed 160. The catalytic bed 160 is adapted to cause a reaction between the fuel vapor and the oxygen molecules to produce carbon dioxide and water. Thus, the output of the catalytic bed 160 is a mixture of nitrogen, water, carbon dioxide and any remaining fuel vapor. This mixture is then directed to an adsorption module 170. The adsorption module 170 is adapted to absorb water, either liquid or vapor, from the stream. The water from the stream may be either retained within the adsorption module 170 or otherwise directed out of the stream. Thus, oxygen is effectively removed from the stream, while carbon dioxide is added. The carbon dioxide can continue to function as an oxygen-free fluid, in addition to the nitrogen, in the transfer of oxygen from the fuel.

The exemplary purification system **100** is illustrated in further detail in Figure 2. The system **100**, in certain embodiments, includes pre-treatment of the fuel and control modules for controlling various aspects of the system **100**. The pre-treatment of the fuel may include processing the fuel through a filter system **134** to remove certain components, such as solid particles, to prevent such components from affecting the operation of the deoxygenation module **110**. Such filter systems are well known to those skilled in the art.

Further, a fuel thermal regulator **136** may be provided to control the temperature of the fuel. The temperature may require regulation based on the requirements of the machine for which the fuel is deoxygenated. The fuel thermal regulator **136** may include a heater for increasing the fuel temperature and/or a heat exchanger for increasing or decreasing the fuel temperature. In certain embodiments, the temperature of the fuel may be increased to facilitate removal of a component.

The control system **400** includes control modules for controlling the various modules of the system **100**. A flow control module **410** is provided to control the flow rates of the fuel and the nitrogen gas. In this regard, the flow control module **410** may be adapted to communicate with and control the flow meter **122** and the pump **132** described above and shown in Figure 1. Similarly, a temperature control module **420** is provided to communicate with and control the fuel thermal regulator **136** for regulating the temperature of the fuel. Finally, an oxygen measurement module **430** may be provided to monitor the operation of the deoxygenation module **110**. In this regard, sensors (not shown) may be provided at the input and output of the deoxygenation module **110**. The sensors may communicate data to the oxygen measurement module **430** to determine the level of deoxygenation being achieved. In some embodiments, the oxygen measurement module **430** may be adapted to transmit a message to an operator indicating a malfunction of the deoxygenation module **110**.

As illustrated in Figure 2, the deoxygenation module **110** includes a fuel-gas contactor **200** and a gas-fuel separator **300**. Each of these components is described below in greater detail.

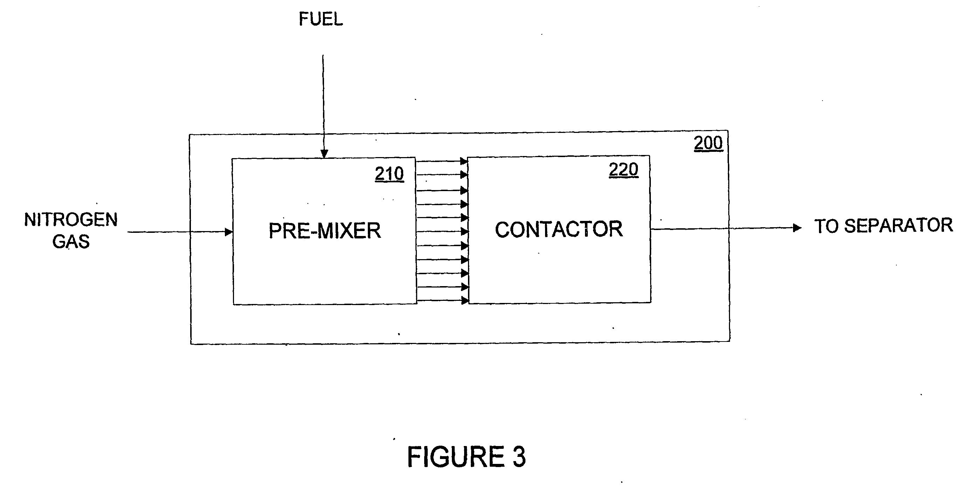

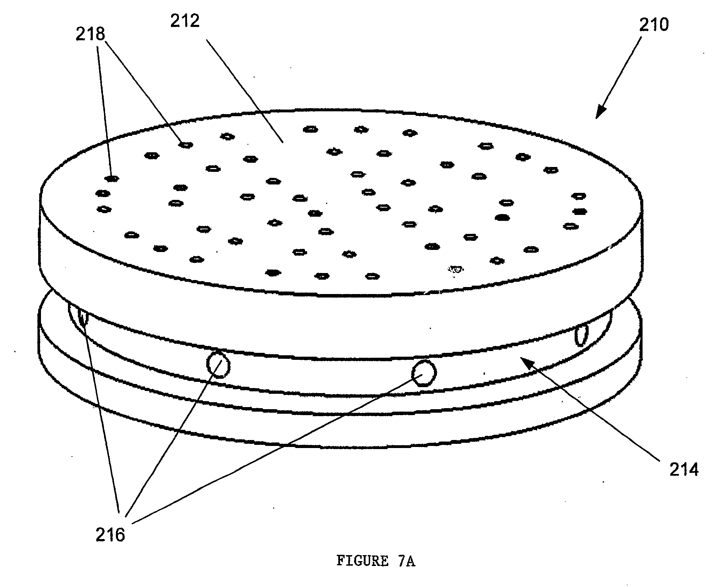

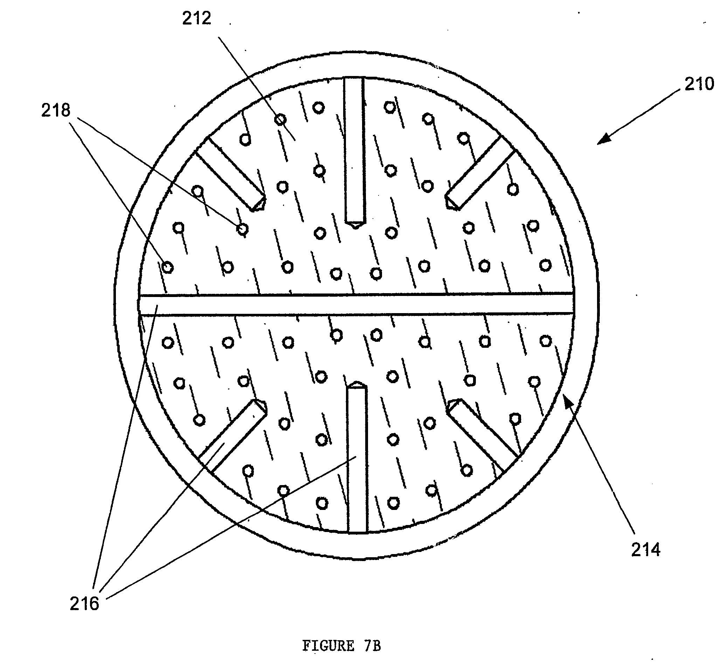

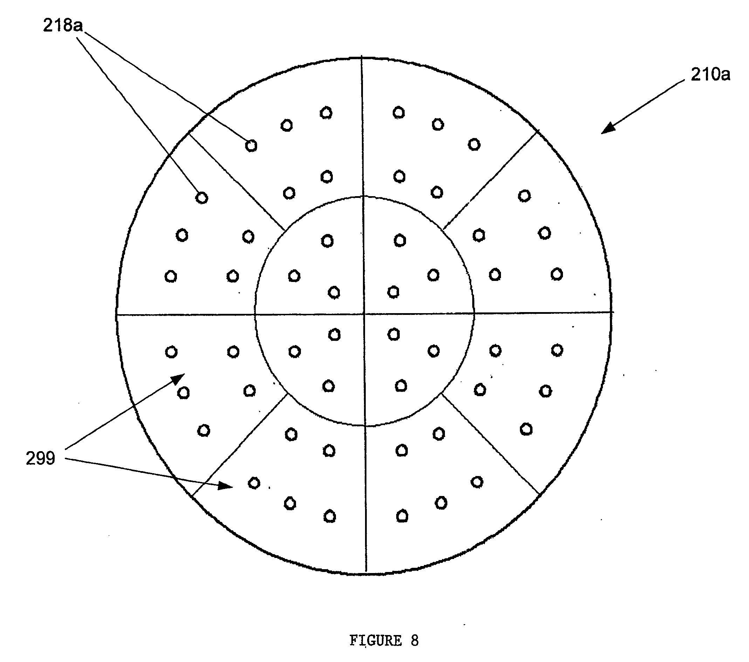

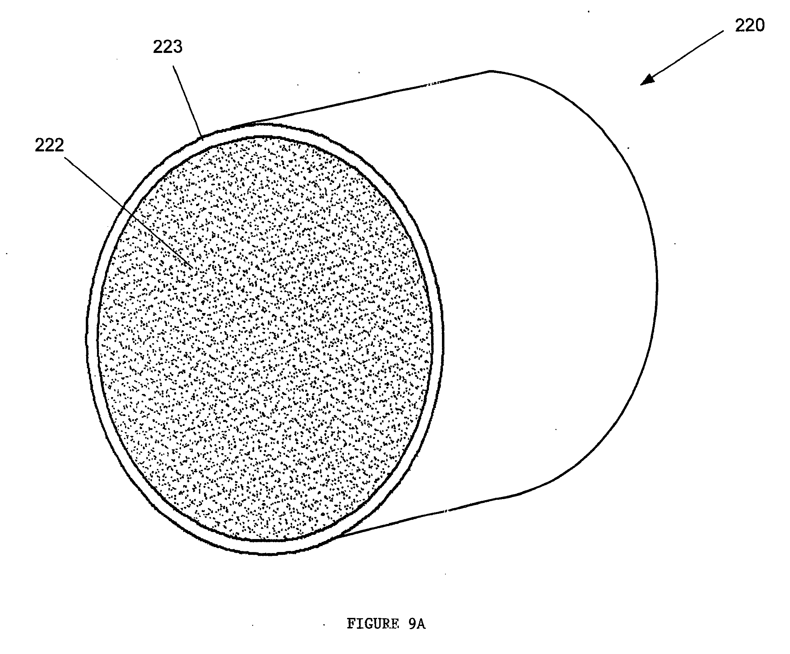

Figure 3 is a schematic illustration of an embodiment of the fuel-gas contactor **200** of the deoxygenation module **110** shown in Figure 2. In this embodiment, the fuel-gas contactor **200** includes a pre-mixer **210** for mixing the input streams of fuel and nitrogen. The pre-mixer **210** facilitates the uniform mixing of the two streams to facilitate deoxygenation of the fuel. An embodiment of the pre-mixer **210** is described in greater detail below with reference to Figures 7A, 7B and 8. The mixture output by the pre-mixer **210** is directed to a contactor **220** for facilitating surface mixing of the fuel and nitrogen, as described in detail below with reference to Figures 9A-10C. The output of the contactor **220** is directed out of the fuel-gas contactor **200** and to the separator **300** (Figure 2).

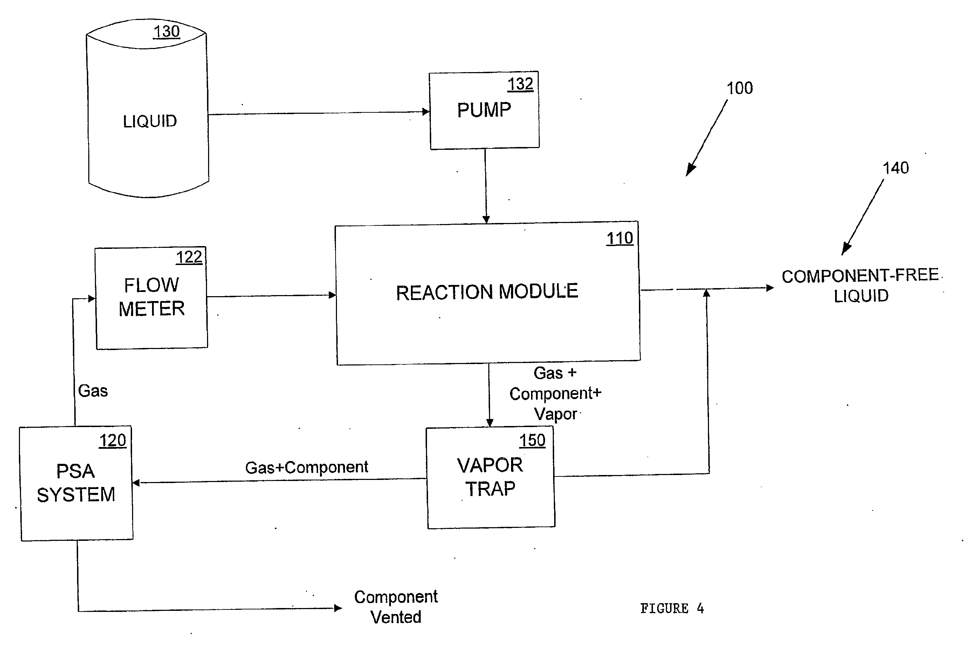

Referring to Figure 4, an exemplary system for facilitating reaction between two or more reactants is schematically illustrated. In the illustrated example, a component is contained in a first reactant and is to be transferred to a second reactant. In one example, both the first reactant and the second reactant can both be fluids. In another example, the first reactant may be a liquid having a component therein. In yet another example, the component may be a gas, such as gaseous oxygen, absorbed in the liquid.

The system **100** includes a reaction module, such as a catalytic reaction module **110**, which is described in greater detail below. The catalytic reaction module **110** is adapted to receive a first reactant from a reservoir such as a liquid tank **130**. The flow of the first reactant into the catalytic reaction module **110** may be facilitated by an optional pump **132** positioned between the liquid tank **130** and the catalytic reaction module **110**. The liquid tank **130**, the pump **132** and the catalytic reaction module **110** are connected using tubes, pipes or lines, for example. The size of the liquid tank **130** and the capacity of the pump **132** may be determined according to particular applications and requirements. In one embodiment, the catalytic reaction module **110** may be adapted to receive and process the first reactant at a rate of 7.57L (2 U.S. gallons) per minute.

The exemplary catalytic reaction module **110** of Figure 4 may also be adapted to receive a supply of a second reactant, such as a gas, to mix with the first reactant. In certain embodiments, the second reactant may be a non-reactive gas, such as nitrogen, argon, helium, or the like. In other embodiments, the second reactant may be a reactive gas, and may be received from a pressurized gas bottle. In other embodiments, the gas may be received from a purification module, such as a highly optimized pressure swing adsorption (PSA) system **120**, which can supply substantially component-free gas (e.g., 99.9% gas). The flow of the second reactant into the catalytic reaction module **110** may be regulated using a flow meter **122**, for example. In one embodiment, the catalytic reaction module **110** can be adapted to receive first and second reactants at a rate based on the desired product output rate.

The catalytic reaction module **110** can be adapted to promote mixing of the first and second reactants. In one embodiment, the mixing results in a transfer of the component, such as oxygen gas, from the first reactant to the second reactant. This aspect of the catalytic reaction module **110** is described in greater detail below with reference to Figures 2, 3, 7A, 7B and 8-10C. Thus, the output of the catalytic reaction module **110** can include one or more streams of products, which may include at least one of the first and second reactants having gone through a catalytic conversion. In the illustrated example, the output of the catalytic reaction module **110** can include a first stream including the first reactant with the component removed therefrom and a second stream which can include the second reactant component therein.

In many cases, certain amounts of the liquid first reactant may evaporate either in the catalytic reaction module **110** or prior to entering the catalytic reaction module **110**. In this regard, the system **100** can include a vapor recovery module **150** through which the second stream is processed. The vapor recovery module **150** may be a vapor trap including a coalescing filter adapted to separate the first reactant vapor from the second stream. The vapor can then be routed to the first stream **140** exiting the catalytic reaction module **110**, as shown in Figure 4. In other embodiments, the recovered vapor may be routed to the liquid tank **130**.

The stream of the second reactant with the component therein from the vapor recovery module **150** can then be directed to the PSA system **120**, which separates the component from the second reactant. The second reactant with the component removed can then be used for further catalytic reaction with the first reactant.

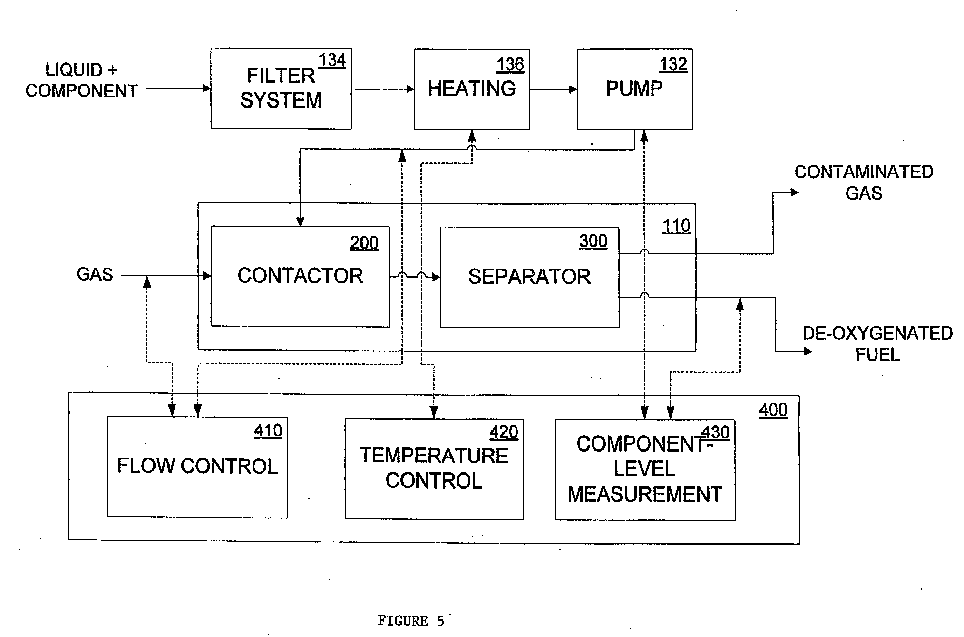

The exemplary system **100** is illustrated in further detail in Figure 5. The system 100, in certain embodiments, includes pre-treatment of the liquid first reactant and control modules for controlling various aspects of the system **100**. The pre-treatment of the first reactant may include processing the first reactant through a filter system **134** to remove certain components, such as solid particles, to prevent such components from affecting the operation of the catalytic reaction module **110**. Such filter systems are well known to those skilled in the art.

Further, a thermal regulator **136** may be provided to control the temperature of the first reactant. The temperature may require regulation based on the requirements of the desired product or products of the system **100**. The thermal regulator **136** may include a heater for increasing the fuel temperature and/or a heat exchanger for increasing or decreasing the fuel temperature. In certain embodiments, the temperature of the fuel may be increased to promote mixing of the first and second reactants.

The control system **400** can include control modules for controlling the various modules of the system **100**. A flow control module **410** can be provided to control the flow rates of the first and second reactants. In this regard, the flow control module **410** may be adapted to communicate with and control the flow meter **122** and the pump **132** described above and shown in Figure 4. Similarly, a temperature control module **420** can be provided to communicate with and control the thermal regulator **136** for regulating the temperature of the first reactant. Finally, a measurement module **430** may be provided to monitor the operation of the catalytic reaction module **110**. In this regard, sensors (not shown) may be provided at the input and output of the catalytic reaction module **110**. The sensors may communicate data to the measurement module **430** to determine desired characteristics of the products. In some embodiments, the measurement module **430** may be adapted to transmit a message to an operator indicating a malfunction of the catalytic reaction module **110**.

As illustrated in Figure 5, the catalytic reaction module **110** can include a contactor module **200** and a separator **300**. Each of these components is described below in greater detail.

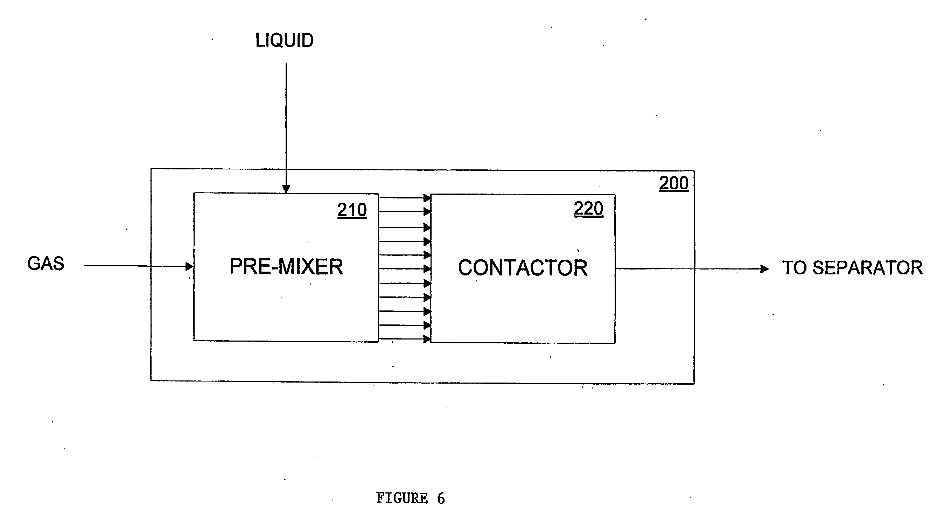

Figure 6 is a schematic illustration of an embodiment of the contactor module **200** of the catalytic reaction module **110** shown in Figure 5. In this embodiment, the contactor module **200** can include a pre-mixer **210** for mixing the input streams of the first and second reactants. The pre-mixer **210** can facilitate the uniform mixing of the two input streams to facilitate intimate mixing of the reactants. An embodiment of the pre-mixer **210** is described in greater detail below with reference to Figures 7A, 7B and 8. The mixture output by the pre-mixer **210** can be directed to a catalytic contactor **220** for facilitating surface mixing of the first reactant and the second reactant, as described in detail below with reference to 9A-10C. The output of the catalytic contactor **220** can be directed out of the contactor module **200** and to the separator **300** (Figure 5).

An embodiment of a pre-mixer **210** will now be described with reference to Figures 7A and 7B. The pre-mixer **210** can be provided to mix the liquid fuel and the gaseous nitrogen immediately before the contactor processing, described below. Even distribution of the fuel and gas allows the contactor to operate more efficiently with less gradients or channeling across or through the contactor. Further, such distribution allows the contactor to operate without being substantially affected by changes in orientation relative to gravitational forces.

The illustrated embodiment of the pre-mixer **210** can include a porous body **212** which allows the nitrogen gas to deliver a relatively even discharge adjacent to the contactor. An annular channel **214** can be provided to receive the nitrogen gas from, for example, the PSA system, and distribute the gas across the cross-section of the porous body **212** through a set of non-axial channels **216**. The non-axial channels **216** guide the gas from the annular channel **214** into various sections of the porous body **212** for diffusion through the porous body along an axial path.

Axial channels **218** can be provided through the pre-mixer **210** and can be substantially evenly distributed, avoiding any non-axial gas channels **216**. The axial channels **218** allow the liquid fuel to pass through the pre-mixer **210.** In a particular embodiment, a large number of axial channels **218** can be provided to facilitate even distribution of the fuel. In one embodiment, the size of the axial channels **218** can be sufficiently large so a particulate will not block passage of the liquid fuel with minimal back pressure.

The porous body **212** of the pre-mixer **210** can preferably be made from a porous material with channels for the liquid, as described above. In other embodiments, the pre-mixer can be made from a solid piece or multi piece assembly of solid materials. In this regard, the pre-mixer may include channels for the liquid as well as channels for the fluid. The channels for the fluid may be substantially smaller than the channels for the liquid. However, the cost to manufacture a pre-mixer with solid materials can be substantially higher compared to the cost of using porous materials.

Porosity of the pre-mixer can be chosen to satisfy certain basic parameters. For example, the gas used in the process (e.g., nitrogen gas) should flow through the porous body **212** with minimal flow restriction, such as approximately 1% - 6% pressure drop under operating conditions. Further, the liquid being processed (e.g., liquid fuel) may pass through the porous material under pressure closely above operating liquid pressure. The porous material should be chemically compatible or resistant to the fluid and liquid being processed.

The porous body may be designed to accommodate various flow patterns for the liquid. For example, in one embodiment, the flow of the liquid may be substantially axial and linear. In other embodiments, the flow may be non-linear through the porous body. Still in other embodiments, the flow may be substantially radial in certain regions.

A small distance may be provided between the pre-mixer **210** and the contactor **220** to allow the pressure across the contactor to equalize. In one embodiment, this distance is approximately 0.25 to 1.25 mm. In another embodiment, direct mating of the pre-mixer **210a** and the contactor **220** may be facilitated by providing a subsectioned pre-mixer, as illustrated in Figure 8. In this embodiment, indented regions **299** may be formed on the face of the pre-mixer **210a** to sectionalize flow to the contactor **220** in order to reduce the effects of orientation and external forces causing inconsistent process output. In this regard, the face of the contactor facing the pre-mixer **210a** may be provided with similar indented regions **299**. If sectionalized flow paths are used, axial channels **218a** of the pre-mixer **210a** should connect to a sectionalized flow compartment of the contactor **220**.

It is noted that the fuel-gas contactor **200** may operate without the pre-mixer. The pre-mixer is provided to reduce the effects of orientation and external forces upon the fuel-gas contactor **200**.

An embodiment of the contactor **220** will now be described with reference to Figure 9A. The contactor **220** can be a porous medium having a porous body **222**. The porous body **222** of the contactor **220** can be adapted to facilitate surface mixing of the liquid fuel and the nitrogen gas, thereby allowing efficient transfer of the oxygen from the fuel to the nitrogen. In this regard, the porous body **222** can be provided with a fine porosity, the pores being small enough to cause surface mixing of the nitrogen gas with the liquid fuel. In one embodiment, the pores have an average pore size of up to 500 µm (microns) (e.g., 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490 or 500 µm (microns)). In this regard, a single porous body may include pores of varying sizes. In a particular embodiment, the pore size in the porous body 222 can be between 350 and 450 µm (microns) and, in a more particular embodiment, approximately 400 µm (microns). The pore sizes can be selected to be sufficiently small to cause surface mixing of the fluid and the liquid, while allowing the fluid and liquid to flow therethrough. In this regard, the size of the pores may be determined by the viscosity of the fluid and the liquid. An impervious casing **223** may be provided to prevent seepage of the liquid and the fluid.

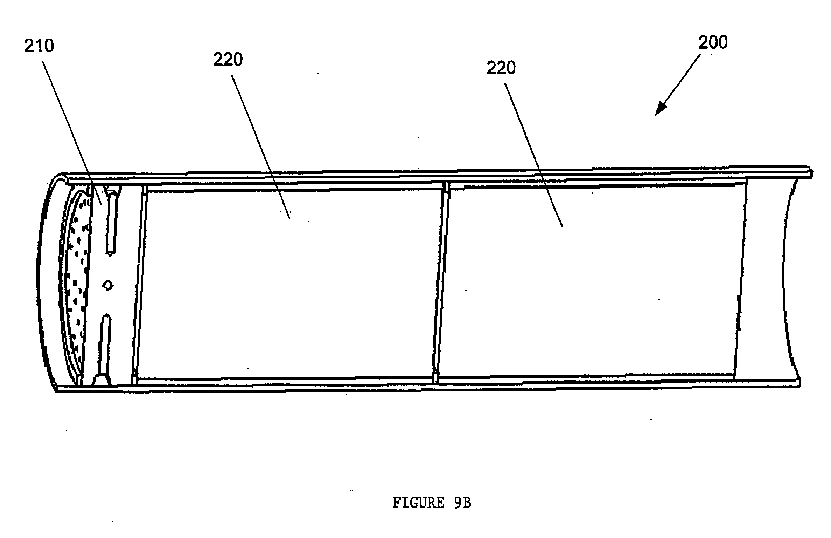

Figure 9B illustrates an embodiment of a contactor module **200** according to the invention. As illustrated in Figure 9B, the fuel-nitrogen mixture may be processed through multiple contactors **220**. Each contactor **220** may result in transfer of oxygen from the fuel to the nitrogen gas. The number of contactors **220** may be dependent on the level of deoxygenation required by the machine using the fuel. Further, the nitrogen gas may be processed to remove the oxygen between the contactors **220** to enhance the deoxygenation process at each contactor **220**.

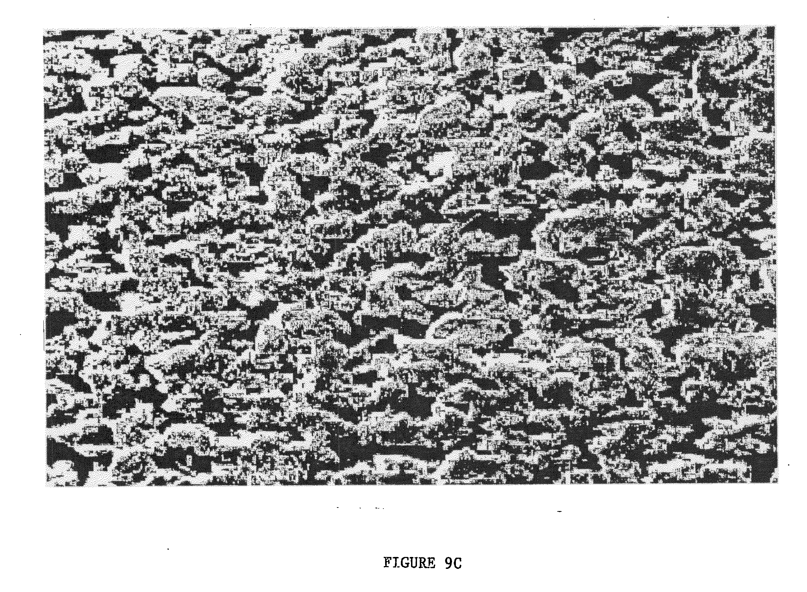

Figure 9C illustrates an embodiment of a porous body having exemplary pore shapes in an embodiment of the contactor. The pore shapes can provide a large surface area to facilitate the mixing of the fluid and the liquid and transfer of a component therebetween. The pore shapes may not be consistent along an axial direction. In a particular embodiment, the pore shape changes continuously in the axial direction to cause a continuous change in the shape of the fluid and liquid traveling therethrough.

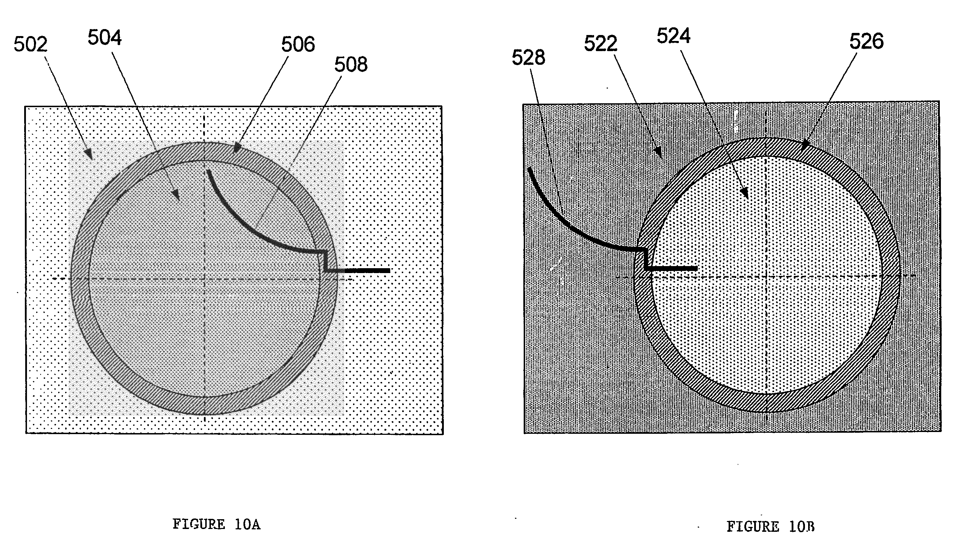

The fine porosity of the porous body **222** creates a pressure differential across the length of the porous medium and results in a highly sheared flow. In this environment, the high-shear mixing of the fuel and nitrogen allows transfer of the oxygen due to a differential in the oxygen partial pressure in the fuel versus the nitrogen. This concept is illustrated in Figures 10A-10C.

Figure 10A illustrates the transfer of oxygen when a droplet of oxygenated fuel **504** is immersed in a large volume of nitrogen gas **502.** Due to the differential in the oxygen partial pressure, oxygen is transferred from the fuel droplet **504** to the nitrogen gas **502.** In this regard, a transfer region **506** forms on the outer surface of the fuel droplet **504**. Due to the limited penetration of the transfer region **506**, the concentration of oxygen in the central region of the fuel droplet **504** remains high, as indicated by the graph line **508**. Graph line **508** represents the oxygen level (vertical axis) as a function of distance (horizontal axis) from the center of the droplet **504.**

Similarly, Figure 10B illustrates the transfer of oxygen when a nitrogen bubble **524** is positioned in a volume of liquid fuel **522**. Again, a transfer region **526** forms on the outer surface of the nitrogen bubble **524**, but the concentration of oxygen in the center of the bubble remains low, while the concentration of oxygen at a small distance from the bubble **524** remains high.

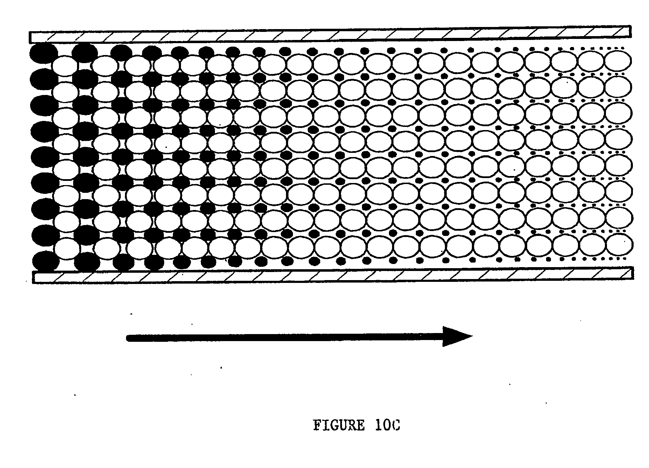

In contrast, as illustrated conceptually in Figure 10C, the fine porosity of the porous body of the contactor **220** can create a fine mixture of the fuel and the nitrogen gas, resulting in greater transfer of oxygen. For purposes of clarity, the porous material is not shown in Figure 10C. Instead, the movement of the fluid and the liquid through the porous material is illustrated. Figure 10C illustrates the movement of the liquid and the fluid through the contactor in a direction indicated by the arrow. The liquid is indicated by dark circles, and the fluid is indicated by the white circles. As the liquid and the fluid move through the porous body, the liquid-fluid interface may be continuously broken and/or reshaped, thereby exposing more surface area for transfer of the component. As noted above, Figure 10C illustrates the mixing only in a conceptual manner. It will be understood by those skilled in the art that the actual movement may be very different. For example, the size of the fluid may also change with the pore sizes and pore shapes.

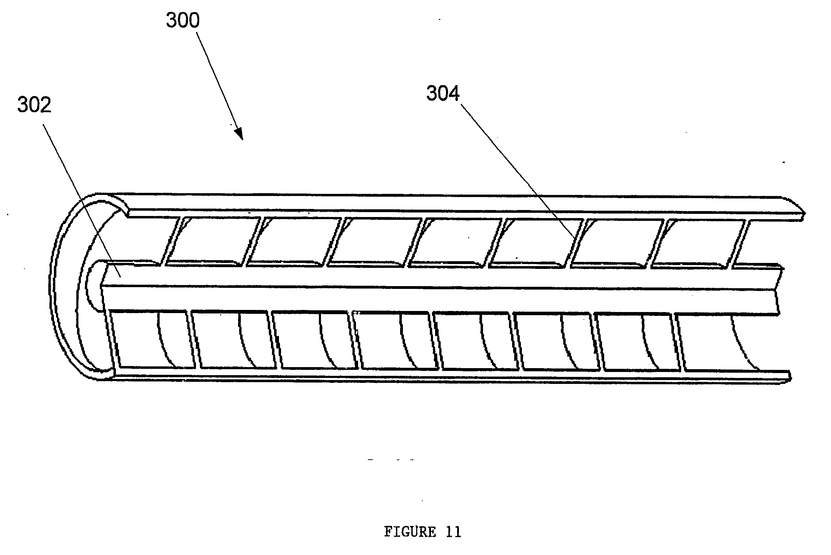

Figure 11 illustrates an embodiment of a separator **300** for separating the nitrogen gas and the liquid fuel after the transfer of oxygen from the fuel to the nitrogen. In the illustrated embodiment, the separator is a centrifugal separator. In this regard, the separator **300** is provided with a central shaft **302** having a spiral track **304**. In operation, the shaft may rotate about a central axis, causing small nitrogen bubbles from the contactor to join, forming larger bubbles or separating altogether from the liquid fuel. In certain embodiments, the centrifugal separator **300** forms large bubbles mixed with the liquid fuel. This mixture is then sent to either another centrifugal separator for complete separation or to a mesh separator for separation of the large bubbles from the liquid.

## Claims

1. A system (100) for facilitating transfer of a component from a liquid phase to a fluid phase, said system comprising a contactor (220) being a porous medium comprising a porous body (222), said contactor being for facilitating transfer of said component between said liquid and said fluid, a fluid purification module for removing said component from said fluid, and a recirculation line for transferring said fluid from said fluid purification module to said contactor (220), **characterised in that**
said porous medium includes pores having a size between 100 and 500µm,
both said liquid and said fluid flow through the porous medium, thereby facilitating mixing of said fluid and said liquid, and
said fluid purification module catalytically consumes at least a portion of said component in said fluid.

2. The system of claim 1, wherein the pore size is approximately 400 µm.

3. The system of claim 1, further comprising:
a pre-mixer (210) for providing a mixture of the fluid and the liquid to the porous medium.

4. The system of claim 3, wherein the pre-mixer (210) comprises:
a plurality of axial channels (218) for passing said liquid therethrough into a path directed toward the porous medium; and
a porous body (212) for diffusing said fluid into the path.

5. The system of claim 4, wherein the pre-mixer (210) further comprises: an annular passage (214) along a circumferential perimeter of the pre-mixer (210) for receiving the fluid and directing the fluid to the porous body (212).

6. The system of claim 1, wherein the porous medium is made of an inert material.

7. The system of claim 1, wherein the liquid is a fuel and the component is a component gas.

8. The system of claim 7, wherein the fuel is at least one of diesel, kerosene, and jet fuel.

9. The system of claim 7, wherein the component gas is oxygen.

10. The system of claim 1, wherein the component is a component gas dissolved in said liquid prior to said mixing.

11. The system of claim 1, wherein the fluid is a gas.

12. The system of claim 11, wherein the gas is a non-reactive gas.

13. The system of claim 12, wherein the non-reactive gas is at least one of nitrogen, argon, helium and carbon dioxide.

## Patentansprüche

1. System (100) zum Vereinfachung des Übergangs einer Komponente von einer flüssigen Phase zu einer fließbaren Phase, wobei das System Folgendes umfasst: einen Kontaktor (220), der aus einem porösen Medium besteht, umfassend einen porösen Körper (222), wobei der Kontaktor dazu dient den Übergang der Komponente zwischen der Flüssigkeit und dem Fluid zu vereinfachen, ein Fluidreinigungsmodul zum Entfernen der Komponente aus dem Fluid und eine Rückführleitung zum Übertragen des Fluids vom Fluidreinigungsmodul zum Kontaktor (220), **dadurch gekennzeichnet, dass**
das poröse Medium Poren mit einer Größe zwischen 100 und 500 µm umfasst, sowohl die Flüssigkeit als auch das Fluid durch das poröse Medium fließen, somit das Vermengen des Fluids und der Flüssigkeit zu ermöglichen, und
das Fluidreinigungsmodul mindestens einen Teil der Komponente in dem Fluid katalytisch verbraucht.

2. System nach Anspruch 1, wobei die Porengröße circa 400 µm beträgt.

3. System nach Anspruch 1, des Weiteren umfassend:
einen Vormischer (210), um dem porösen Medium eine Mischung bestehend aus dem Fluid und der Flüssigkeit zuzuführen.

4. System nach Anspruch 3, wobei der Vormischer (210) Folgendes umfasst:
eine Vielzahl an Axialkanälen (218), um die Flüssigkeit durch sie hindurch auf einen Pfad zu bringen, der zum porösen Medium hin gerichtet ist, und
einen porösen Körper (212), um das Fluid in den Pfad zu verteilen.

5. System nach Anspruch 4, wobei der Vormischer (210) des Weiteren Folgendes umfasst: einen ringförmigen Durchlass (214) entlang einem Umfang des Vormischers (210) zur Aufnahme des Fluids und zum Weiterleiten des Fluids zum porösen Körper (212).

6. System nach Anspruch 1, wobei das poröse Medium aus einem inerten Material besteht.

7. System nach Anspruch 1, wobei die Flüssigkeit Treibstoff ist und die Komponente ein Komponentengas ist.

8. System nach Anspruch 7, wobei der Treibstoff mindestens eines von Diesel, Kerosin und Düsenkraftstoff ist.

9. System nach Anspruch 7, wobei das Komponentengas Sauerstoff ist.

10. System nach Anspruch 1, wobei die Komponente ein Komponentengas ist, das in der Flüssigkeit vor dem Vermengen aufgelöst ist.

11. System nach Anspruch 1, wobei das Fluid ein Gas ist.

12. System nach Anspruch 11, wobei das Gas ein nicht-reaktives Gas ist.

13. System nach Anspruch 12, wobei das nicht-reaktive Gas mindestens eines aus Stickstoff, Argon, Helium und Kohlenstoffdioxid ist.

## Revendications

1. Système (100) pour faciliter le transfert d'un composant d'une phase liquide à une phase fluide, ledit système comprenant un contacteur (220) étant un médium poreux comprenant un corps poreux (222), ledit contacteur servant à faciliter le transfert dudit composant entre ledit liquide et ledit fluide, un module de purification de fluide pour retirer ledit composant dudit fluide, et une ligne de recirculation pour transférer ledit fluide dudit module de purification de fluide vers ledit contacteur (220), **caractérisé en ce que**
ledit médium poreux inclut des pores ayant une taille entre 100 et 500 µm,
ledit liquide et ledit fluide coulent à travers le médium poreux, facilitant ainsi le mélange dudit fluide et dudit liquide, et
ledit module de purification de fluide consume catalytiquement au moins une partie dudit composant dans ledit fluide.

2. Système selon la revendication 1, dans lequel la taille des pores est d'approximativement 400 µm.

3. Système selon la revendication 1, comprenant en outre :
un prémixeur (210) pour fournir un mélange du fluide et du liquide au médium poreux.

4. Système selon la revendication 3, dans lequel le prémixeur (210) comprend :
une pluralité de canaux axiaux (218) pour y faire passer ledit liquide dans une voie dirigée vers le médium poreux ; et
un corps poreux (212) pour diffuser ledit fluide dans la voie.

5. Système selon la revendication 4, dans lequel le prémixeur (210) comprend en outre : un passage annulaire (214) le long d'un périmètre circonférentiel du prémixeur (210) pour recevoir le fluide et diriger le fluide vers le corps poreux (212).

6. Système selon la revendication 1, dans lequel le médium poreux est fait d'un matériau inerte.

7. Système selon la revendication 1, dans lequel le liquide est un combustible et le composant est un gaz de composant.

8. Système selon la revendication 7, dans lequel le combustible est au moins un parmi le diesel, le kérosène, et le carburant aviation.

9. Système selon la revendication 7, dans lequel le gaz de composant est l'oxygène.

10. Système selon la revendication 1, dans lequel le composant est un gaz de composant dissous dans ledit liquide avant ledit mélange.

11. Système selon la revendication 1, dans lequel le fluide est un gaz.

12. Système selon la revendication 11, dans lequel le gaz est un gaz non-réactif.

13. Système selon la revendication 12, dans lequel le gaz non-réactif est au moins un parmi l'azote, l'argon, l'hélium et le dioxide de carbone.
